# EUROPÄISCHE PATENTSCHRIFT

(11) **EP 3 665 505 B1**
(45) Veröffentlichungstag und Bekanntmachung des Hinweises auf die Patenterteilung: **26.07.2023**
(21) Anmeldenummer: 18749368.9
(22) Anmeldetag: 02.08.2018
(51) Int. Cl.: G01S 17/931, G01S 7/486, G01S 7/497, G01S 17/42

(54) **ERMITTELN DER MAXIMALEN REICHWEITE EINES LIDAR-SENSORS**
DETERMINING THE MAXIMUM RANGE OF A LIDAR SENSOR
DÉTERMINATION DE LA PORTÉE MAXIMALE D'UN CAPTEUR LIDAR

(30) Priorität: 09.08.2017 DE 102017118160
(43) Veröffentlichungstag der Anmeldung: 17.06.2020
(73) Patentinhaber: Valeo Schalter und Sensoren GmbH, 74321 Bietigheim-Bissingen (DE)
(72) Erfinder: FISCHER, Michael, 96317 Kronach Neuses (DE)
(74) Vertreter: Pothmann, Karsten
(86) Internationale Anmeldenummer: PCT/EP2018/070935
(87) Internationale Veröffentlichungsnummer: WO 2019/030093

(56) Entgegenhaltungen:
- EP-A1- 2 482 094
- EP-A1- 2 515 143
- US-A1- 2005 180 149
- US-A1- 2015 138 529
- US-B1- 6 512 575

## Beschreibung

Die vorliegende Erfindung betrifft ein Betriebsverfahren für einen LIDAR-Sensor mit den Schritten Senden eines LIDAR-Signals mit einer vorbestimmten Normalleistung und Empfangen eines zurückgestreuten Anteils des LIDAR-Signals mit einer vorbestimmten Normalempfindlichkeit zur Ermittlung der Entfernung von in der von dem LIDAR-Sensor abgetasteten Umgebung vorhandenen Objekten von dem LIDAR-Sensor in einem Normalbetrieb.

Außerdem betrifft die Erfindung einen LIDAR-Sensor zum Senden eines LIDAR-Signals und zum Empfangen eines zurückgestreuten Anteils des LIDAR-Signals, um in einem Normalbetrieb des LIDAR-Sensors die Entfernung von in einer von dem LIDAR-Sensor abgetasteten Umgebung vorhandenen Objekten von dem LIDAR-Sensor zu ermitteln, wobei der LIDAR-Sensor derart eingerichtet ist, dass das LIDAR-Signal im Normalbetrieb mit einer vorbestimmten Normalleistung gesendet und der zurückgestreuten Anteils des LIDAR-Signals mit einer vorbestimmten Normalempfindlichkeit empfangen wird.

Aus der Praxis ist es schon seit längerem bekannt, LIDAR-Sensoren in Fahrzeugen einzusetzen, insbesondere für Fahrerassistenzsystem, zuletzt auch vermehrt im Rahmen von selbstfahrenden Systemen. Wie z.B. in der DE 10 2006 044 794 A1 beschrieben, weist ein LIDAR-Sensor häufig einen als Infrarotstrahler im Pulsbetrieb arbeitenden Laser als Sender, eine Fotodiode als Empfänger und eine Auswerteelektronik auf. Der Sensor führt eine Laufzeitmessung der ausgesendeten infraroten Laserstrahlen durch. Gemessen wird die Zeit, die das Laserlicht vom Sensor zum angestrahlten Objekt und wieder zurück benötigt. Die Elektronik berechnet dann daraus die Entfernung zu dem Objekt. Auf diese Weise kann ein Fahrzeug z.B. den Abstand zu einem vorausfahrenden Fahrzeug anpassen, ohne dass der Fahrer aktiv eingreifen muss.

Aus Sicherheitsgründen ist es jedoch wichtig, dass die maximale Reichweite des LIDAR-Sensors bekannt ist. Ist diese maximale Reichweite nämlich nicht bekannt, so kann eine Situation eintreten, in der z.B. aufgrund von schlechten Sichtverhältnissen, wie durch Nebel, die maximale Reichweite des LIDAR-Sensors deutlich reduziert ist, so dass deshalb ein für das Fahrzeug relevantes Objekt nicht detektiert und damit "freie Fahrt" signalisiert wird. Mit anderen Worten: Wenn bei guter Sicht von einer maximalen Reichweite des LIDAR-Sensors von über 200 m ausgegangen werden kann, so bedeutet bei schlechten Sichtverhältnissen die Tatsache, dass innerhalb von 200 m vor dem LIDAR-Sensor kein Objekt erfasst worden ist, nicht zwingend dass sich dort auch kein derartiges Objekt befindet. Vielmehr kann es sein, dass die maximale Reichweite des LIDAR-Sensors aufgrund der schlechten Sichtverhältnisse auf 50 m reduziert ist und weiter entfernte Objekte einfach nicht mehr erfasst werden können. Aus Sicherheitsgründen muss eine derartige Situation natürlich bekannt sein, um Vorbeugemaßnahmen ergreifen zu können.

Grundsätzlich kann die Reichweite eines LIDAR-Sensors über den Verlauf der Lichtintensität des zurückgestreuten Anteils des LIDAR-Signals und dessen Energie bestimmt werden. Hierfür ist jedoch eine aufwändige Wandlung des analogen Signals in eine zeitlich hochauflösende digitale Repräsentation erforderlich, was nur mit kostenintensiven Analog-nach-Digital-Umsetzern durchgeführt werden kann. Alternative und kostengünstigere Konzepte zur Auswertung des empfangenen Lichtimpulses vergleichen diesen lediglich mit einer Schwelle, was jedoch keine Aussagen über die Signalform zulässt und somit eine Ermittlung der maximalen Reichweite aufgrund vieler Unbekannter deutlich erschwert.

Die EP 2 482 094 A1 offenbart einen Laserscanner mit einem rotierenden Spiegel als Ablenkeinheit für Sende- und Empfangsstrahlen, sowie einem Testziel, das im Gehäuse angeordnet ist. Dabei ist ein Verfahren zur Funktionsprüfung des Gesamtsystems vorgesehen.

Die EP 2 515 143 A1 betrifft ebenfalls einen Laserscanner mit einem rotierenden Spiegel als Ablenkeinheit für Sende- und Empfangsstrahlen sowie einem im Gehäuse angeordneten Testziel. Dabei wird eine Reichweite des Laserscanners auf Basis einer Signaldämpfung ermittelt, indem zunächst die Sendeleistung des Laserscanners mit dem Testziel überwacht wird. Anschließend werden Sendelichtstrahlen in einen Überwachungsbereich ausgesendet und ein zeitlicher Verlauf eines Empfangssignals ermittelt. Aus dem zeitlichen Verlauf des Empfangssignals wird dann bestimmt, ob ein Softtarget im Überwachungsbereich vorhanden ist. Zusätzlich wird die Dichte des Softtargets ermittelt, um auf eine resultierende Reichweite des Sensors zu schließen. In Abhängigkeit der resultierenden Reichweite des Sensors wird eine Schaltbedingung an die Sichtverhältnisse angepasst, die eine Detektionsfähigkeit des Laserscanners definiert.

Ausgehend davon liegt der Erfindung die Aufgabe zugrunde, eine derartige Möglichkeit zum Ermitteln der maximalen Reichweite eines LIDAR-Sensors zur Verfügung zu stellen, die einfach, verlässlich und kostengünstig einsetzbar ist.

Die Lösung der Aufgabe erfolgt erfindungsgemäß durch den Gegenstand der unabhängigen Patentansprüche. Vorteilhafte Ausgestaltungen der Erfindung sind in den Unteransprüchen beschrieben.

Erfindungsgemäß ist somit ein Betriebsverfahren für einen LIDAR-Sensor mit den folgenden Schritten vorgesehen:
- Senden eines LIDAR-Signals mit einer vorbestimmten Normalleistung und Empfangen eines zurückgestreuten Anteils des LIDAR-Signals mit einer vorbestimmten Normalempfindlichkeit zur Ermittlung der Entfernung von in der von dem LIDAR-Sensor abgetasteten Umgebung vorhandenen Objekten in einem Normalbetrieb, gekennzeichnet durch
- wiederholtes Unterbrechen des Normalbetriebs durch einen Prüfbetrieb, wobei der Prüfbetrieb folgende Schritte umfasst:
- Senden eines LIDAR-Signals mit einer gegenüber der vorbestimmten Normalleistung um ein vorbestimmtes Maß verringerten Prüfleistung und/oder Empfangen des zurückgestreuten Anteils des LIDAR-Signals mit einer gegenüber der vorbestimmten Normalempfindlichkeit um ein vorbestimmtes Maß verringerten Prüfempfindlichkeit und Ermitteln eines Werts für eine Untergrenze für die im Normalbetrieb des LIDAR-Sensors vorhandene maximale Reichweite des LIDAR-Sensors auf der Grundlage der im Normalbetrieb ermittelten Entfernung derartiger Objekte, die im Prüfbetrieb nicht mehr erfasst werden.

Es ist somit ein maßgeblicher Aspekt der Erfindung, dass der Normalbetrieb des LIDAR-Sensors, in dem die Umgebung des LIDAR-Sensors abgetastet wird, um die Entfernung von sich dort befindlichen Objekten von dem LIDAR-Sensor zu ermitteln, wiederholt von einem Prüfbetrieb unterbrochen wird. Dieser Prüfbetrieb dient dazu, einen Wert für eine Untergrenze für die maximale Reichweite des LIDAR-Sensors im Normalbetrieb zu ermitteln.

Diese Ermittlung eines Werts für eine Untergrenze für die maximale Reichweite des LIDAR-Sensors im Normalbetrieb erfolgt dadurch, dass die Leistung des LIDAR-Sensors reduziert wird, also die maximale Reichweite des LIDAR-Sensors kurzzeitig aktiv verringert wird. Die Verringerung der Leistung des LIDAR-Sensors kann einerseits durch Verringerung der Sendeleistung und andererseits durch Verringerung der Empfangsempfindlichkeit erfolgen. Während es grundsätzlich ausreichend ist, entweder die Sendeleistung zu verringern oder die Empfangsempfindlichkeit zu verringern, können natürlich gleichzeitig auch die Sendeleistung sowie die Empfangsempfindlichkeit verringert werden. Maßgeblich dabei ist jedoch, dass die Verringerung der Sendeleistung bzw. die Verringerung der Empfangsleistung jeweils um ein vorbestimmtes bekanntes Maß auf eine entsprechend bekannte verringerte Prüfleistung bzw. Prüfempfindlichkeit erfolgt. In diesem Zusammenhang sei darauf hingewiesen, dass es zwar bevorzugt aber nicht zwingend ist, dass der LIDAR-Sensor im Normalbetrieb mit maximaler Leistung betrieben wird.

Die Verringerung der Sendeleistung bzw. der Empfangsempfindlichkeit um ein derartiges vorbestimmtes Maß erlaubt es, aufgrund von derartigen Objekten, die im Normalbetrieb noch erfasst worden sind, im Prüfbetrieb mit der verringerten Sendeleistung bzw. der verringerten Empfangsempfindlichkeit jedoch nicht mehr erfasst werden können, auf einen Wert für eine Untergrenze für die maximale Reichweite des LIDAR-Sensors zu schließen, die im Normalbetrieb vorliegt. Anders formuliert: Aufgrund von solchen Objekten, die im Prüfbetrieb nicht mehr erfasst werden können, kann die maximale Reichweite des LIDAR-Sensors im Prüfbetrieb abgeschätzt werden und damit, wegen der bekannten Reduzierung der Leistung des LIDAR-Sensors im Prüfbetrieb, auf einen Wert für eine Untergrenze für die maximale Reichweite im Normalbetrieb geschlossen werden.

Ein derartiger Wechsel vom Normalbetrieb in den Prüfbetrieb kann z.B. mehrmals in einer Sekunde erfolgen, so dass praktisch in Echtzeit immer ein aktueller Wert für die maximale Reichweite des LIDAR-Sensors vorliegt. Auf diese Weise kann, ebenfalls praktisch in Echtzeit, auf eine Verringerung der maximalen Reichweite des LIDAR-Sensors durch z.B. widrige Umgebungsbedingungen geschlossen und entsprechend reagiert werden.

Ein wesentlicher Vorteil der Erfindung liegt darin, dass die Lösung rein durch die Programmierung des Sensors implementierbar ist und damit keine erhöhten Produktionskosten erzeugt. Darüber hinaus kann mitunter aufgrund der Einfachheit des erfindungsgemäßen Betriebsverfahrens für den LIDAR-Sensor die Prozessorleistung des LIDAR-Sensors reduziert werden, was einerseits die Herstellungskosten senken kann und andererseits einen reduzierten Stromverbrauch während einer Anwendung in einem Fahrzeug ermöglicht.

Die gegenüber der Normalleistung verringerte Prüfleistung bzw. die gegenüber der Normalempfindlichkeit verringerte Prüfempfindlichkeit kann auf unterschiedliche Weisen vorbestimmt sein. Gemäß einer bevorzugten Weiterbildung der Erfindung ist jedoch vorgesehen, dass die Prüfleistung auf einen vorbestimmten Anteil der Normalleistung verringert wird und/oder dass die Prüfempfindlichkeit auf einen vorbestimmten Anteil der Normalempfindlichkeit verringert wird. Das bedeutet, dass gemäß dieser bevorzugten Ausführungsform der Erfindung eine Reduzierung der Sendeleistung bzw. der Empfangsempfindlichkeit im Prüfbetrieb auf einen vorbestimmten prozentualen Anteil der Leistung bzw. der Empfindlichkeit im Normalbetrieb erfolgt. Dies hat den Vorteil, dass absolute Werte für die Sendeleistung bzw. die Empfangsempfindlichkeit im Normalbetrieb nicht bekannt sein müssen.

Der Wert für die im Normalbetrieb des LIDAR-Sensors vorhandene maximale Reichweite des LIDAR-Sensors, der auf der Grundlage der im Normalbetrieb ermittelten Entfernung derartiger Objekte, die im Prüfbetrieb nicht mehr erfasst werden können, ermittelt worden ist, ist eine Untergrenze für die maximale Reichweite des LIDAR-Sensors im Normalbetrieb. Diese Untergrenze gibt an, wie weit die maximale Reichweite des LIDAR-Sensors im Normalbetrieb mit Sicherheit reicht.

Um laufend über eine Untergrenze für die maximale Reichweite des LIDAR-Sensors informiert zu sein, sieht die Erfindung vor, dass der Normalbetrieb wiederholt durch den Prüfbetrieb unterbrochen wird. Je häufiger eine derartige Unterbrechung erfolgt, umso mehr kann gewährleistet werden, über die Untergrenze für die maximale Reichweite des LIDAR-Sensors praktisch ir Echtzeit informiert zu sein. Insofern ist es gemäß einer bevorzugten Ausführungsform der Erfindung vorgesehen, dass der Normalbetrieb von dem Prüfbetrieb periodisch unterbrochen wird, z.B. mehrfach in einer Sekunde.

Grundsätzlich können die Daten zum Ermitteln eines Werts für eine Untergrenze für die im Normalbetrieb des LIDAR-Sensors vorhandenen maximalen Reichweite auf der Grundlage der im Normalbetrieb ermittelten Entfernung derartiger Objekte, die im Prüfbetrieb nicht mehr erfasst werden, mittels unterschiedlicher Verfahren berechnet werden. Vorzugsweise sind dazu jedoch Daten vorab empirisch ermittelt worden. Mit anderen Worten: Im Vorfeld des eigentlichen Betriebs des LIDAR-Sensors sind Testmessungen durchgeführt worden, im Rahmen derer ermittelt worden ist, wie es sich um die maximale Reichweite des LIDAR-Sensors verhält, wenn Objekte in bestimmten Entfernungen von dem LIDAR-Sensor im Normalbetrieb noch erfasst werden konnten, im Prüfbetrieb jedoch nicht mehr. Derartige Daten können z.B. in einer Tabelle abgelegt werden, um darauf während des eigentlichen Betriebs des LIDAR-Sensors zurückgreifen zu können. Ferner kann die Abhängigkeit der Entfernung der im Prüfbetrieb nicht mehr ermittelten Objekte von der maximalen Reichweite des LIDAR-Sensors näherungsweise durch eine Formel beschrieben werden, die dann im eigentlichen Betrieb des LIDAR-Sensors zur Ermittlung eines Werts für die maximale Reichweite im Rahmen des Prüfbetriebs verwendet wird.

Die Erfindung betrifft auch die Verwendung eines Betriebsverfahrens, wie zuvor beschrieben, in einem Fahrzeug, insbesondere in einem Kraftfahrzeug.

Weiterhin betrifft die Erfindung ein Computerprogrammprodukt zur Durchführung eines Betriebsverfahrens für einen LIDAR-Sensor, wie zuvor beschrieben.

Schließlich betrifft die Erfindung auch einen LIDAR-Sensor zum Senden eines LIDAR-Signals und zum Empfangen eines zurückgestreuten Anteils des LIDAR-Signals, um in einem Normalbetrieb des LIDAR-Sensors die Entfernung von in einer von dem LIDAR-Sensor abgetasteten Umgebung vorhandenen Objekten zu ermitteln, wobei der LIDAR-Sensor derart eingerichtet ist, dass das LIDAR-Signal im Normalbetrieb mit einer vorbestimmten Normalleistung gesendet und der zurückgestreuten Anteils des LIDAR-Signals mit einer vorbestimmten Normalempfindlichkeit empfangen wird, dadurch gekennzeichnet, dass der LIDAR-Sensor außerdem derart eingerichtet ist, dass der Normalbetrieb wiederholt durch einen Prüfbetrieb unterbrochen wird und dass im Prüfbetrieb ein LIDAR-Signal mit einer gegenüber der vorbestimmten Normalleistung um ein vorbestimmtes Maß verringerten Prüfleistung gesendet und/oder der zurückgestreute Anteil des LIDAR-Signals mit einer gegenüber der vorbestimmten Normalempfindlichkeit um ein vorbestimmtes Maß verringerten Prüfempfindlichkeit empfangen wird und ein Wert für eine Untergrenze für die im Normalbetrieb des LIDAR-Sensors vorhandene maximale Reichweite des LIDAR-Sensors auf der Grundlage der im Normalbetrieb ermittelten Entfernung derartiger Objekte ermittelt wird, die im Prüfbetrieb nicht mehr erfasst werden.

Vorzugsweise ist vorgesehen, dass der LIDAR-Sensor derart eingerichtet ist, dass die Prüfleistung auf einen vorbestimmten Anteil der Normalleistung verringert wird und/oder dass die Prüfempfindlichkeit auf einen vorbestimmten Anteil der Normalempfindlichkeit verringert wird.

Weiterhin ist es bevorzugt, dass der LIDAR-Sensor derart eingerichtet ist, dass der Normalbetrieb von dem Prüfbetrieb periodisch unterbrochen wird.

Weiterhin ist gemäß einer bevorzugten Weiterbildung der Erfindung ein Speicher vorgesehen, in dem vorab ermittelte Daten zum Ermitteln der im Normalbetrieb des LIDAR-Sensors vorhandenen maximalen Reichweite des LIDAR-Sensors auf der Grundlage der im Normalbetrieb ermittelten Entfernung derartiger Objekte, die im Prüfbetrieb nicht mehr erfasst werden, abgelegt sind.

Die Erfindung betrifft auch ein Fahrzeug, vorzugsweise ein Kraftfahrzeug, mit einem LIDAR-Sensor, wie zuvor beschrieben.

Nachfolgend wird die Erfindung unter Bezugnahme auf die anliegenden Zeichnungen anhand eines bevorzugten Ausführungsbeispiels näher erläutert. Die dargestellten Merkmale können sowohl jeweils einzeln als auch in Kombination einen Aspekt der Erfindung darstellen.

Es zeigen
- Fig. 1: schematisch ein Fahrzeug mit einem LIDAR-Sensor gemäß einem bevorzugten Ausführungsbeispiel der Erfindung,
- Fig. 2: eine schematische Darstellung des Betriebs des LIDAR-Sensors gemäß dem bevorzugten Ausführungsbeispiel der Erfindung in einem Normalbetrieb und
- Fig. 3: eine schematische Darstellung des Betriebs des LIDAR-Sensors gemäß dem bevorzugten Ausführungsbeispiel der Erfindung in einem Prüfbetrieb.

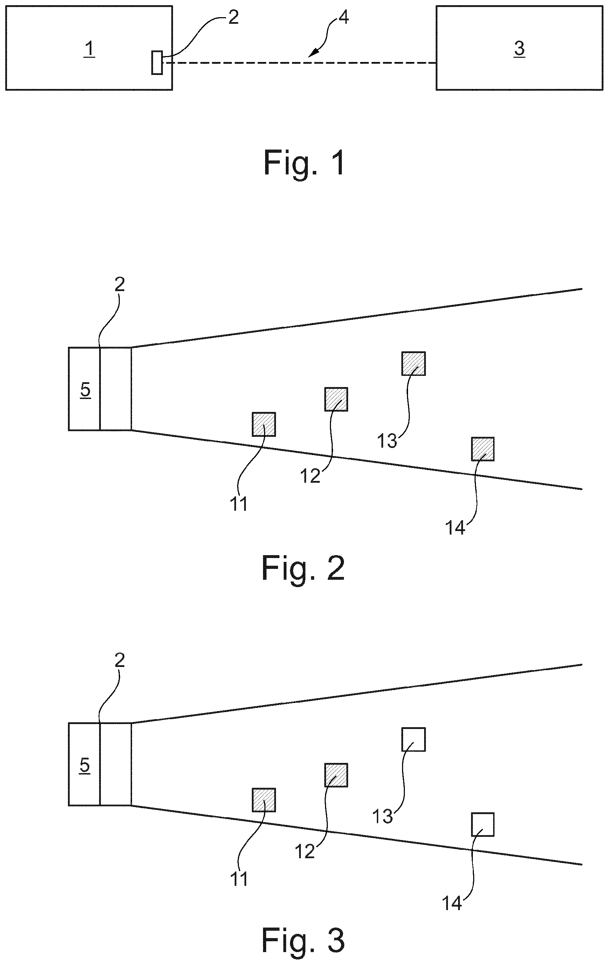

Figur 1 zeigt schematisch ein Fahrzeug 1, das in seinem Frontbereich mit einem LIDAR-Sensor 2 gemäß einem bevorzugten Ausführungsbeispiel der Erfindung ausgerüstet ist. Wie ein herkömmlicher LIDAR-Sensor ist der LIDAR-Sensor 2 gemäß dem bevorzugten Ausführungsbeispiel der Erfindung zum Senden eines LIDAR-Signals 4 und zum Empfangen eines zurückgestreuten Anteils des LIDAR-Signals 4 eingerichtet, um im eigentlichen Betrieb, vorliegend Normalbetrieb genannt, die Entfernung von Objekten zu ermitteln, die sich im Bereich der von dem LIDAR-Sensor 2 abgetasteten Umgebung befinden. In Figur 1 dargestellt ist, dass der LIDAR-Sensor 2 des Fahrzeugs ein LIDAR-Signal 4 nach vorne hin abstrahlt. Im Erfassungsbereich des LIDAR-Signals 4 befindet sich vorliegend ein weiteres Fahrzeug 3, so dass Teile des LIDAR-Signals 4 am Fahrzeug 3 zurückgestreut und vom LIDAR-Sensor 2 erfasst werden können.

Gemäß dem vorliegend beschriebenen bevorzugten Ausführungsbeispiel der Erfindung ist nun insbesondere vorgesehen, dass der LIDAR-Sensor 2 in zwei verschiedenen Betriebsformen betrieben wird, zum einen nämlich in dem schon angesprochenen Normalbetrieb und zum anderen in einem Prüfbetrieb. Vorliegend wird der LIDAR-Sensor 2 im Normalbetrieb mit voller Leistung betrieben, das heißt mit maximaler Sendeleistung und mit maximaler Empfangsempfindlichkeit. Auf diese Weise besteht die größte maximale Reichweite des LIDAR-Sensors 2, die, wie in Figur 2 dargestellt, dafür ausreicht, sämtliche der sich in der abgetasteten Umgebung des LIDAR-Sensors 2 befindlichen Objekte 11, 12, 13 und 14 zu detektieren. Dass die Objekte 11, 12, 13 und 14 von dem LIDAR-Sensor 2 detektiert worden sind, wird vorliegend dadurch angedeutet, dass die Objekte 11, 12, 13 und 14 schraffiert dargestellt sind.

Um nun zu ermitteln, wie groß die maximale Reichweite des LIDAR-Sensors 2 mit Sicherheit tatsächlich ist, wird in dem in Figur 3 schematisch gestellten Prüfbetrieb die Normalleistung für das Senden des LIDAR-Signals auf eine Prüfleistung reduziert, die nur 30 % der Normalleistung beträgt. Die Empfangsempfindlichkeit bleibt dabei gleich, weicht also nicht von der Normalempfindlichkeit ab. Damit verbunden ist, dass nicht mehr alle Objekte 11, 12, 13 und 14 vom LIDAR-Sensor erfasst werden können. Die Objekte 13 und 14 liegen jetzt nämlich außerhalb der maximalen Reichweite bei der auf die Prüfleistung reduzierten Sendeleistung, so dass die Objekte 13 und 14 nicht mehr schraffiert dargestellt sind. Anders formuliert: Die Objekte 13 und 14 liegen offensichtlich außerhalb der maximalen Reichweite des LIDAR-Sensors im Prüfbetrieb, so dass damit jedenfalls eine Obergrenze für die maximalen Reichweite des LIDAR-Sensors im Prüfbetrieb vorliegt, da die Entfernung der Objekte 13 bzw. 14 vom LIDAR-Sensor 2 aufgrund der Messung im Normalbetrieb bekannt ist.

Mit Hilfe von vorab empirisch ermittelten und in einem Speicher 5 des LIDAR-Sensors 2 abgelegten Daten dafür, wie stark die maximale Reichweite bei einer Reduzierung der Sendeleistung auf 30 % der Normalleistung zurückgeht, kann daher nun ermittelt werden, wie hoch die maximale Reichweite des LIDAR-Sensors im Normalbetrieb tatsächlich ist, wenn die Objekte 13 und 14 mit ihren im Normalbetrieb ermittelten Entfernungen vom LIDAR-Sensor 2 im Prüfbetrieb nicht mehr detektiert werden können. Konkret erlaubt die im Normalbetrieb ermittelte Entfernung des Objekts 12, das im Prüfbetrieb gerade noch erfasst werden konnte, die Bestimmung einer Untergrenze für die maximale Reichweite des LIDAR-Sensors im Normalbetrieb. Fällt diese Untergrenze für die maximale Reichweite für den Normalbetrieb unter eine vorbestimmte Schwelle, so können entsprechend dem vorliegend beschriebenen bevorzugten Ausführungsbeispiel der Erfindung entsprechende Gegenmaßnahmen eingeleitet werden.

### Bezugszeichenliste

- 1: Fahrzeug
- 2: LIDAR-Sensor
- 3: weiteres Fahrzeug
- 4: LIDAR-Signal
- 5: Speicher
- 11: Objekt
- 12: Objekt
- 13: Objekt
- 14: Objekt

## Patentansprüche

1. Betriebsverfahren für einen LIDAR-Sensor (2) mit den folgenden Schritten:
- Senden eines LIDAR-Signals (4) mit einer vorbestimmten Normalleistung und Empfangen eines zurückgestreuten Anteils des LIDAR-Signals (4) mit einer vorbestimmten Normalempfindlichkeit zur Ermittlung der Entfernung von in der von dem LIDAR-Sensor (2) abgetasteten Umgebung vorhandenen Objekten (11, 12, 13, 14) in einem Normalbetrieb, **gekennzeichnet durch**
- wiederholtes Unterbrechen des Normalbetriebs durch einen Prüfbetrieb, wobei der Prüfbetrieb folgende Schritte umfasst:
- Senden eines LIDAR-Signals (4) mit einer gegenüber der vorbestimmten Normalleistung um ein vorbestimmtes Maß verringerten Prüfleistung und/oder Empfangen des zurückgestreuten Anteils des LIDAR-Signals (4) mit einer gegenüber der vorbestimmten Normalempfindlichkeit um ein vorbestimmtes Maß verringerten Prüfempfindlichkeit und Ermitteln eines Werts für eine Untergrenze für die im Normalbetrieb des LIDAR-Sensors (2) vorhandene maximale Reichweite des LIDAR-Sensors (2) auf der Grundlage der im Normalbetrieb ermittelten Entfernung derartiger Objekte (13, 14), die im Prüfbetrieb nicht mehr erfasst werden.

2. Betriebsverfahren für einen LIDAR-Sensor (2) nach Anspruch 1, **dadurch gekennzeichnet, dass** die Prüfleistung auf einen vorbestimmten Anteil der Normalleistung verringert wird und/oder dass die Prüfempfindlichkeit auf einen vorbestimmten Anteil der Normalempfindlichkeit verringert wird.

3. Betriebsverfahren für einen LIDAR-Sensor (2) nach einem der vorhergehenden Ansprüche, **dadurch gekennzeichnet, dass** der Normalbetrieb von dem Prüfbetrieb periodisch unterbrochen wird.

4. Betriebsverfahren für einen LIDAR-Sensor (2) nach einem der vorhergehenden Ansprüche, **dadurch gekennzeichnet, dass** Daten zum Ermitteln einer Untergrenze der im Normalbetrieb des LIDAR-Sensors (2) vorhandenen maximalen Reichweite des LIDAR-Sensors (2) auf der Grundlage der im Normalbetrieb ermittelten Entfernung derartiger Objekte (13, 14), die im Prüfbetrieb nicht mehr erfasst werden, vorab empirisch ermittelt worden sind.

5. Verwendung des Betriebsverfahrens nach einem der vorhergehenden Ansprüche in einem Fahrzeug (1).

6. Computerprogrammprodukt umfassend Befehle, zur Durchführung des Betriebsverfahrens nach einem der Ansprüche 1 bis 4 bei einem LIDAR-Sensor gemäß Anspruch 7.

7. LIDAR-Sensor (2) zum Senden eines LIDAR-Signals (4) und zum Empfangen eines zurückgestreuten Anteils des LIDAR-Signals (4), um in einem Normalbetrieb des LIDAR-Sensors (2) die Entfernung von in einer von dem LIDAR-Sensor (2) abgetasteten Umgebung vorhandenen Objekten zu ermitteln, wobei der LIDAR-Sensor (2) derart eingerichtet ist, dass das LIDAR-Signal (4) im Normalbetrieb mit einer vorbestimmten Normalleistung gesendet und der zurückgestreute Anteil des LIDAR-Signals (4) mit einer vorbestimmten Normalempfindlichkeit empfangen wird, **dadurch gekennzeichnet, dass** der LIDAR-Sensor (2) außerdem derart eingerichtet ist, dass der Normalbetrieb wiederholt durch einen Prüfbetrieb unterbrochen wird und dass im Prüfbetrieb ein LIDAR-Signal (4) mit einer gegenüber der vorbestimmten Normalleistung um ein vorbestimmtes Maß verringerten Prüfleistung gesendet und/oder der zurückgestreute Anteil des LIDAR-Signals (4) mit einer gegenüber der vorbestimmten Normalempfindlichkeit um ein vorbestimmtes Maß verringerten Prüfempfindlichkeit empfangen wird und ein Wert für eine Untergrenze für die im Normalbetrieb des LIDAR-Sensors (2) vorhandene maximale Reichweite des LIDAR-Sensors (2) auf der Grundlage der im Normalbetrieb ermittelten Entfernung derartiger Objekte ermittelt wird, die im Prüfbetrieb nicht mehr erfasst werden.

8. LIDAR-Sensor (2) nach Anspruch 7, **dadurch gekennzeichnet, dass** der LIDAR-Sensor (2) derart eingerichtet ist, dass die Prüfleistung auf einen vorbestimmten Anteil der Normalleistung verringert wird und/oder dass die Prüfempfindlichkeit auf einen vorbestimmten Anteil der Normalempfindlichkeit verringert wird.

9. LIDAR-Sensor (2) nach Anspruch 7 oder 8, **dadurch gekennzeichnet, dass** der LIDAR-Sensor (2) derart eingerichtet ist, dass der Normalbetrieb von dem Prüfbetrieb periodisch unterbrochen wird.

10. LIDAR-Sensor (2) nach einem der Ansprüche 7 bis 9, **dadurch gekennzeichnet, dass** ein Speicher (5) vorgesehen ist, in dem vorab ermittelte Daten zum Ermitteln des Werts für eine Untergrenze für die im Normalbetrieb des LIDAR-Sensors (2) vorhandene maximale Reichweite des LIDAR-Sensors (2) auf der Grundlage der im Normalbetrieb ermittelten Entfernung derartiger Objekte (13, 14), die im Prüfbetrieb nicht mehr erfasst werden, abgelegt sind.

## Claims

1. Method of operation for a LIDAR sensor (2), having the following steps:
- sending a LIDAR signal (4) at a predetermined normal power and receiving a back-scattered component of the LIDAR signal (4) with a predetermined normal sensitivity to ascertain the distance of objects (11, 12, 13, 14) present in the surroundings scanned by the LIDAR sensor (2) in a normal mode, **characterized by**
- repeated interruption of the normal mode by a test mode, wherein the test mode comprises the following steps:
- sending a LIDAR signal (4) at a test power, which is decreased by a predetermined amount in comparison with the predetermined normal power, and/or receiving the back-scattered component of the LIDAR signal (4) with a test sensitivity, which is decreased by a predetermined amount in comparison with the predetermined normal sensitivity, and ascertaining a value for a lower limit for the maximum range of the LIDAR sensor (2) that is available in the normal mode of the LIDAR sensor (2) on the basis of the distance, ascertained in the normal mode, of objects (13, 14) that are no longer detected in the test mode.

2. Method of operation for a LIDAR sensor (2) according to Claim 1, **characterized in that** the test power is decreased to a predetermined proportion of the normal power and/or **in that** the test sensitivity is decreased to a predetermined proportion of the normal sensitivity.

3. Method of operation for a LIDAR sensor (2) according to either of the preceding claims, **characterized in that** the normal mode is interrupted by the test mode periodically.

4. Method of operation for a LIDAR sensor (2) according to one of the preceding claims, **characterized in that** data for ascertaining a lower limit of the maximum range of the LIDAR sensor (2) that is available in the normal mode of the LIDAR sensor (2) on the basis of the distance, ascertained in the normal mode, of objects (13, 14) that are no longer detected in the test mode have been ascertained empirically beforehand.

5. Use of the method of operation according to one of the preceding claims in a vehicle (1).

6. Computer program product comprising instructions, for performing the method of operation according to one of Claims 1 to 4 for a LIDAR sensor according to Claim 7.

7. LIDAR sensor (2) for sending a LIDAR signal (4) and for receiving a back-scattered component of the LIDAR signal (4) so as, in a normal mode of the LIDAR sensor (2), to ascertain the distance of objects present in surroundings scanned by the LIDAR sensor (2), wherein the LIDAR sensor (2) is configured such that the LIDAR signal (4) is sent at a predetermined normal power in the normal mode and the back-scattered component of the LIDAR signal (4) is received with a predetermined normal sensitivity, **characterized in that** the LIDAR sensor (2) is additionally configured such that the normal mode is repeatedly interrupted by a test mode and that, in the test mode, a LIDAR signal (4) is sent at a test power that is decreased by a predetermined amount in comparison with the predetermined normal power and/or the back-scattered component of the LIDAR signal (4) is received with a test sensitivity that is decreased by a predetermined amount in comparison with the predetermined normal sensitivity and a value for a lower limit for the maximum range of the LIDAR sensor (2) that is available in the normal mode of the LIDAR sensor (2) is ascertained on the basis of the distance, ascertained in the normal mode, of objects that are no longer detected in the test mode.

8. LIDAR sensor (2) according to Claim 7, **characterized in that** the LIDAR sensor (2) is configured such that the test power is decreased to a predetermined proportion of the normal power and/or that the test sensitivity is decreased to a predetermined proportion of the normal sensitivity.

9. LIDAR sensor (2) according to Claim 7 or 8, **characterized in that** the LIDAR sensor (2) is configured such that the normal mode is interrupted by the test mode periodically.

10. LIDAR sensor (2) according to one of Claims 7 to 9, **characterized in that** there is provision for a memory (5) storing previously ascertained data for ascertaining the value for a lower limit for the maximum range of the LIDAR sensor (2) that is available in the normal mode of the LIDAR sensor (2) on the basis of the distance, ascertained in the normal mode, of objects (13, 14) that are no longer detected in the test mode.

## Revendications

1. Procédé de fonctionnement d'un capteur LIDAR (2), ledit procédé comprenant les étapes suivantes :
- envoyer un signal LIDAR (4) avec une puissance normale prédéterminée et recevoir une partie rétrodiffusée du signal LIDAR (4) avec une sensibilité normale prédéterminée pour déterminer en fonctionnement normal la distance d'objets (11, 12, 13, 14) présents dans l'environnement balayé par le capteur LIDAR (2), **caractérisé par** les étapes suivantes :
- interrompre de manière répétée le fonctionnement normal par un fonctionnement de test, le fonctionnement de test comprenant les étapes suivantes :
- envoyer un signal LIDAR (4) avec une puissance de test réduite d'une quantité prédéterminée par rapport à la puissance normale prédéterminée et/ou recevoir la partie rétrodiffusée du signal LIDAR (4) avec une sensibilité de test réduite d'une quantité prédéterminée par rapport à la sensibilité normale prédéterminée et déterminer une valeur pour une limite inférieure pour la portée maximale du capteur LIDAR (2) en fonctionnement normal du capteur LIDAR (2) sur la base de la distance, déterminée en fonctionnement normal ; d'objets (13, 14) qui ne sont plus détectés en fonctionnement de test.

2. Procédé de fonctionnement d'un capteur LIDAR (2) selon la revendication 1, **caractérisé en ce que** la puissance de test est réduite à une proportion prédéterminée de la puissance normale et/ou **en ce que** la sensibilité de test est réduite à une proportion prédéterminée de la sensibilité normale.

3. Procédé de fonctionnement d'un capteur LIDAR (2) selon l'une des revendications précédentes, **caractérisé en ce que** le fonctionnement normal est interrompu périodiquement par le fonctionnement de test.

4. Procédé de fonctionnement d'un capteur LIDAR (2) selon l'une des revendications précédentes, **caractérisé en ce que** des données destinées à déterminer une limite inférieure de la portée maximale du capteur LIDAR (2) en fonctionnement normal du capteur LIDAR (2) sur la base de la distance, déterminée en fonctionnement normal, d'objets (13, 14) qui ne sont plus détectés en fonctionnement de test, ont été déterminées empiriquement à l'avance.

5. Utilisation du procédé de fonctionnement selon l'une des revendications précédentes dans un véhicule (1) .

6. Progiciel comprenant des instructions destinées à mettre en œuvre le procédé de fonctionnement selon l'une des revendications 1 à 4 dans un capteur LIDAR selon la revendication 7.

7. Capteur LIDAR (2) destiné à envoyer un signal LIDAR (4) et à recevoir une partie rétrodiffusée du signal LIDAR (4) afin de déterminer, en fonctionnement normal du capteur LIDAR (2), la distance d'objets présents dans l'environnement balayé par le capteur LIDAR (2), le capteur LIDAR (2) étant conçu de manière à ce que le signal LIDAR (4) soit envoyé avec une puissance normale prédéterminée en fonctionnement normal et la partie rétrodiffusée du signal LIDAR (4) soit reçue avec une sensibilité normale prédéterminée, **caractérisé en ce que** le capteur LIDAR (2) est également conçu de manière à ce que le fonctionnement normal soit interrompu de manière répétée par un fonctionnement de test, et **en ce que**, en fonctionnement de test, un signal LIDAR (4) soit envoyé avec une puissance de test réduite d'une quantité prédéterminée par rapport à la puissance normale prédéterminée et/ou la partie rétrodiffusée du signal LIDAR (4) soit reçue avec une sensibilité de test réduite d'une quantité prédéterminée par rapport à la sensibilité normale prédéterminée et une valeur pour une limite inférieure pour la portée maximale du capteur LIDAR (2) en fonctionnement normal du capteur LIDAR (2) soit déterminée sur la base de la distance, déterminée en fonctionnement normal, d'objets qui ne sont plus détectés en fonctionnement de test.

8. Capteur LIDAR (2) selon la revendication 7, **caractérisé en ce que** le capteur LIDAR (2) est conçu de manière à ce que la puissance de test soit réduite à une proportion prédéterminée de la puissance normale et/ou que la sensibilité de test soit réduite à une proportion prédéterminée de la sensibilité normale.

9. Capteur LIDAR (2) selon la revendication 7 ou 8, **caractérisé en ce que** le capteur LIDAR (2) est conçu de manière à ce que le fonctionnement normal soit périodiquement interrompu par le fonctionnement de test.

10. Capteur LIDAR (2) selon l'une des revendications 7 à 9, **caractérisé en ce qu'**une mémoire (5) est prévue dans laquelle sont mémorisées des données préalablement déterminées destinées à déterminer la valeur d'une limite inférieure pour la portée maximale du capteur LIDAR (2) en fonctionnement normal du capteur LIDAR (2) sur la base de la distance, déterminée en fonctionnement normal, d'objets (13, 14) qui ne sont plus détectés en fonctionnement de test.
